Europäisches Patentamt

European Patent Office

Office européen des brevets

(19)

(11) EP 1 615 046 A1

(12) EUROPEAN PATENT APPLICATION

(43) Date of publication:
11.01.2006 Bulletin 2006/02

(51) Int Cl.:
*G01S 7/295* (2006.01) *G01S 7/40* (2006.01)
*G01S 13/88* (2006.01)

(21) Application number: 05076527.0

(22) Date of filing: 04.07.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.07.2004 US 886484**

(71) Applicant: **NORTHROP GRUMMAN CORPORATION**
**Los Angeles,**
**California 90067 (US)**

(72) Inventors:
• **Lahti, Stephen Charles**
**Huntington Beach, California 92649 (US)**

• **Hayward, Kirk Wesley**
**Beverly Hills, California 90211 (US)**
• **Harwick, Wayne Thomas**
**Porter Ranch, California 91326 (US)**
• **Gentry, Jeffrey Dale**
**Redondo Beach, California 90278 (US)**
• **Bernhardt, Jonathan**
**Los Angeles, California 90034 (US)**

(74) Representative: **Thacker, Darran Ainsley**
**Serjeants,**
**25 The Crescent,**
**King Street**
**Leicester LE1 6RX (GB)**

(54) **Sensor management based on Analytic Hierarchy Process**

(57)     A method is provided for managing tasks to be performed by a sensor system. The method comprises the steps of: using an Analytic Hierarchy Process to determine priority values for a first set of tasks; performing the task having the highest priority value; and using the analytic hierarchy process to determine priority values for a second set of tasks.

FIG. 2

EP 1 615 046 A1

**Description**

FIELD OF THE INVENTION

This invention relates to methods for task scheduling, and more particularly to the use of such methods to control the operation of sensors.

BACKGROUND OF THE INVENTION

Traditional approaches to scheduling military surveillance radar activities utilize a few basic rules that govern the priority and scheduling of any given task. Priority, Earliest Deadline First, and First In First Out are types of scheduling policies that have been employed in the past. Some scheduling policies can be inflexible in dynamic situations producing less than optimum results. The determination of the relative priority of tasks often requires a difficult and complex assessment of multiple criteria in real-time, and is likely to be error prone. The resulting task rankings can vary from one operator to another and can be conflicting.

Active Electronically Scanned Array (AESA) Radar technology, coupled with ever improving signal-processing throughput rates, provides radar systems with agile rapid beam pointing antennas and full mode interleaving capabilities. These systems are able to execute individual tasks in fractions of a second. The operator(s) are challenged to effectively use these radars to their full potential under time critical dynamic battle situations. Hence, there may be a significant benefit to automating the sensor manager functions.

While a sensor resource optimization model has been previously proposed, that model was concerned mainly with the steps of locating and identifying targets. There remains a need for a method that can prioritize multiple tasks in real-time based on the value of the tasks.

SUMMARY OF THE INVENTION

This invention provides a method for managing tasks to be performed by a sensor system. The method comprises the steps of: using an Analytic Hierarchy Process to determine priority values for a first set of tasks; performing the task having the highest priority value; and using the Analytic Hierarchy Process to determine priority values for a second set of tasks.

In another aspect, the invention provides a method of prioritizing sensor tasks using an analytic hierarchy process, the method comprising the steps of: defining a plurality of mission types; establishing an inter-criteria weight for each of the mission types; defining a plurality of evaluation criteria; establishing an inter-criteria weight for each of the evaluation criteria; using the inter-criteria weights for the mission types and the inter-criteria weights for the evaluation criteria to determine a relative value associated with each of the tasks; and selecting the task having the highest value.

BRIEF DESCRIPTION OF THE DRAWINGS

FIG. 1 is a flow chart illustrating the method of the invention.

FIG. 2 is a flow chart illustrating the steps of the Analytic Hierarchy Process.

DETAILED DESCRIPTION OF THE INVENTION

This invention uses a multi-criteria decision-making tool known as an Analytic Hierarchy Process (AHP) to perform real-time prioritization of tasks. In one embodiment, multiple tasks can be performed by a radar or other type of surveillance sensor. The AHP process can be efficiently applied to the operation of a multi-mission, multi-mode sensor in a dynamic environment, for example, where the sensor is mounted on a surveillance aircraft. The invention can be used to automate a sensor manager by establishing a sensor operational policy. The order of task execution is determined by the relative value of each task using the AHP algorithm.

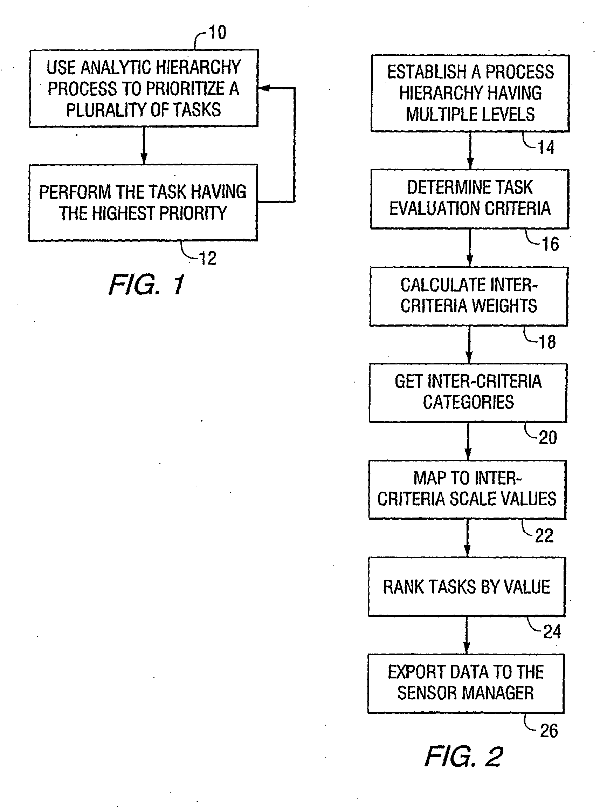

FIG. 1 is a flow chart illustrating the method of the invention. Block 10 shows that the AHP process is performed to prioritize a plurality of tasks. Once a priority value has been assigned to the tasks, the task having the highest priority is performed as shown in block 12. Then the AHP process is repeated for the remaining tasks and any new tasks that may have been identified to produce additional task priority values.

The method of this invention can be used to continually update task priorities. For example, once a task has been identified as the first task to be completed, the process will be performed to determine the next task. The method can evaluate multiple criteria quickly and make decisions concerning a large numbers of tasks.

The Analytic Hierarchy Process (AHP) is a decision-making methodology that uses partial information, data, and experience to determine a ranked value set among multiple options. In this context, the options are the sensor tasks to be valued. AHP uses a structural hierarchy to make value calculations according to a set of structured rules. A hierarchy is a representation of a complex problem using a multi-level structure. A hierarchy permits a problem or goal to be decomposed into Levels and Alternatives. "Alternatives" refers to the alternative jobs to be performed by the sensor. The value of each alternative job is computed by multiplying its Global Weight (Level 1 weight multiplied by the Level 2 weight) by the scaling (Level 3) selected by the user. For example, Level 0 is the Goal, Level One is the Mission type, and Level Two is the decomposed Level One Criteria. While three mission types are illustrated in the described example, the invention is not limited to three types of missions.

The AHP algorithm evaluates and ranks the tasks, and a scheduler selects the task with the highest value. Various equations are used to compute the relative value associated with radar tasks such as Search, Track, Identification (ID), Image, etc. A best value from a subset of tasks can be used to determine priorities and help to better utilize scarce resources.

The Analytic Hierarchy Process uses a hierarchy of criteria separated into multiple levels. Various parameters are used to establish the relative importance of the criteria within the levels and between the levels. A Level refers to the hierarchy level. Hierarchies include a Goal, Levels, and Alternatives. A given Level includes the Criteria at a given level of composition. In one embodiment of the invention, Level One refers to the mission types: for example, Air-to-Ground, Reconnaissance and Air-to-Air, and Level Two refers to the decomposition within each mission type: for example the elements that make up an Air-to-Ground mission.

FIG. 2 is a flow chart illustrating the steps of the Analytic Hierarchy Process. A process hierarchy is established (block 14) and task evaluation criteria are determined (block 16). Then Inter-Criteria Weights are determined (block 18). These Inter-Criteria Weights represent weights between criteria in different levels. Next, Intra-Criteria (categories) are determined (block 20). Weights are calculated by an AHP algorithm using the Eigenvector method. Categories refer to the Criteria Labels within a given Criterion. Intra-Criteria Weights are weights between criteria in the same Level.

Performance-to-value maps (Scales) are set up within each Criteria (block 22) and the value and ranking of the tasks is calculated (block 24). The value data is then exported to a sensor manager (block 26), and sensor manager instructs one or more sensors to perform the task having the highest priority value.

This invention can be applied to specific mission types and Inter-Criteria defined for military air and ground surveillance, and reconnaissance missions that may be performed by a single airborne sensor. The basic sensor manager design and algorithm set can be extended to other applications by adapting the criteria to other types of missions and sensor characteristics.

For example, the Air-To-Air Surveillance Evaluation Criteria can be:

1. Target Classification, for example, whether a target has a FRIEND or FOE status.
2. Target Size.
3. Target ID, for example, the type of target.
4. Target Range, that is, the range from the Ownship in a radar antenna coordinate frame, where the Ownship is the aircraft of reference (e.g. a surveillance aircraft).
5. Covariance Data, defined as the position and velocity error terms of the target.
6. Range Rate, defined as the target's line on sight component of the relative velocity between the Ownship and the target.
7. Named Area Of Interest, for example, an operator defined area of relative importance.
8. Operator Priority, for example, an operator defined priority of relative importance.
9. Time Since Last Update, which conveys the need for an update.
10. Engagement Status, for example, with respect to the progress of a target/weapon engagement or interception: "None" means that no engagement is planned; "Pending" means that a target has been paired with a shooter or weapon; "Active" means that a target has been paired with a weapon, but the shooter is not requesting a high accuracy track; and "Terminal" means that a target has been paired with a weapon and the shooter is requesting a high accuracy track.

The Air-To-Ground Surveillance Evaluation Criteria can be:

1. Target Classification, for example, whether a target has a FRIEND or FOE status.
2. Target Size.
3. Target ID, for example, the type of target.
4. Covariance Data, defined as the position and velocity error terms of the target.
5. Named Area Of Interest, for example, an operator defined area of relative importance.
6. Operator Priority, for example, an operator defined priority of relative importance.
7. Time Since Last Update, which conveys the need for an update.
8. Engagement Status, for example, with respect to the progress of a target/weapon engagement or interception:

"None" means that no engagement is planned; "Pending" means that a target has been paired with a shooter or weapon; "Active" means that a target has been paired with a weapon, but the shooter is not requesting a high accuracy track; and "Terminal" means that a target has been paired with a weapon and the shooter is requesting a high accuracy track

The Reconnaissance Evaluation Criteria can be:

1. Optimized Angle, defined as the current angle of a synthetic aperture radar (SAR) center relative to a radar bore-sight or a requested look angle.
2. Visibility, such as the percentage of area not masked by terrain within the SAR area.
3. Time Before Turn, that is, a determination of whether the SAR can be completed before the next planned turn in the flight.
4. Named Area Of Interest, for example, operator defined areas of relative importance.
5. Operator Priority, for example, operator defined priority of relative importance.
6. Allowable Latency, defined as the urgency of the dwell execution.

Each Level One (mission) is reducible into Level Two Criteria. For example, the Air-to-Ground Evaluation Criteria can be decomposed into Level Two Criteria (target classification, target size, ..., engagement status). Eight Level Two Criteria are shown in the following list.

Air-to-Ground Surveillance Evaluation Criteria are reducible into the following Level Two Criteria for Air-to-Air missions:

1. Target Classification.
2. Target Size.
3. Target ID.
4. Covariance Data.
5. Named Area Of Interest.
6. Operator Priority.
7. Time Since Last Update.
8. Engagement Status.

Inter-Criteria Weights must be established between the criteria in different levels. There are two ways to determine Inter-Criteria Weights: (1) Assignment of Weights to the criteria; and (2) Pair-Wise Voting between criteria. The Assignment of Weights method can be used for setting Inter-Criteria Weights for the first time, or more likely, for assigning a set of weights computed previously by the Pair-Wise Voting method. The Assignment of Weights method is preferred for real-time processing since no user interaction is required. The Pair-Wise Voting method can be used to set the Inter-Criteria Weights for the first time or for reevaluating the weights, so it can be thought of as calibration procedure.

The Assignment of Weights method will now be described. For the example sensor manager presented here, there are two levels of Inter-Criteria Weights. The weights can be assigned interactively (for example, using a graphical user interface (GUI)), hard-coded, or read from some type of media. A value is assigned to each of the Level One and Level Two criteria.

Values are assigned for Level One, while a weight is calculated for Level Two using the AHP pair-wise voting method. The value assignment is the best estimate of experts in the field for the types of missions at hand. Values can be assigned as floating point numbers ranging from 0.0 to 1.0 (the value interval).

Normalization of weights refers to the calculation of weights, such that, the weights on any given Level (e.g. Level One or Level Two) sum to one. For Level One, the local weights are normalized by the sum of the Level One weights. For Level Two, the local weights are normalized by the sum of the Level Two weights for each category. A normalization needs to be done for each Level One and Level Two Criteria. Hence, four separate normalizations need to be performed; Mission (Level One); and Air-to-Air, Air-to-Ground, and Surveillance mission types (Level 2). Normalizations are required so that the relative magnitudes in each level (equal to one) make it possible to compare and rank all stimuli in all levels.

For Level One:

$$\bar{u}_i = \frac{u_i}{\sum_{j=1}^{3} u_j} \qquad i = 1,2,3 \qquad\qquad (1)$$

where $u_i$ is the weight assigned to the Level One Criteria.

An example of an Air-to-Air Mission is when the sensor is being operated in an Autonomous Search Mode and/or a Cued Search Mode, looking for airborne targets. Once target(s) are acquired, the Sensor will transition to tracking the targets. When commanded to perform classification/identification, the sensor will run various modes to determine classification/identification. Upon force command engagement decisions, the sensor will support engagements with high accuracy tracks.

For Level Two:

$$\bar{x}_i = \frac{x_i}{\sum\limits_{k=1}^{10} x_k} \qquad i = 1,2,...10 \qquad\qquad (2)$$

$$\bar{y}_i = \frac{y_i}{\sum\limits_{k=1}^{8} y_k} \qquad i = 1,2,...8 \qquad\qquad (3)$$

$$\bar{z}_i = \frac{z_i}{\sum\limits_{k=1}^{6} z_k} \qquad i = 1,2,...6 \qquad\qquad (4)$$

In the assignment method (as distinct from the pair-wise voting method), the x, y, z are the "local" normalized assignments for the Level Two Criteria (Air-to-Air, Air-to-Ground, and Surveillance) respectively.

The following equations represent the global weights for each of the Level One categories.

$$w_{1i} = \bar{u}_1 \bar{x}_i \qquad i = 1,2,...10 \qquad\qquad (5)$$

$$w_{2i} = \bar{u}_2 \bar{y}_i \qquad i = 1,2,...8 \qquad\qquad (6)$$

$$w_{3i} = \bar{u}_3 \bar{z}_i \qquad i = 1,2,...6 \qquad\qquad (7)$$

That is, the global weights are the product of the Inter-Criteria Weights at Level One multiplied by the corresponding Inter-Criteria Weights at Level Two. The value of the alternative is computed by multiplying the Global Weight (Level 1 weight multiplied by the Level 2 weights) by each (appropriate) Level 3 Scale Value.

A scale is the lowest Level within the hierarchy structure, excluding the Alternatives. A scale consists of Labels and corresponding assigned Values for each Criterion. A category is a set of Labels for a given Criterion Scale. The Labels within a Scale are ranked in order of value. These labels provide the link to an associated value within the appropriate Scale. Values of scales represent the utility attached to the labels within a given Scale (similar to an X,Y Cartesian graph, but ordinal in measurements). A Setting refers to a given selection of a descriptive Label and an associated value for a Scale.

Inter-Criteria are the Criteria in Level One that are further decomposed in Level Two. For example, a Level One Criteria (Air-to-Ground) is decomposed into its parts in Level Two. The phrase "Intra-Criteria" (also Criterion) refers to the Labels and Values attached to a given Criterion. The Criterion most often refers to Level Three Labels and Values.

The Intra-Criteria categories map from performance, constraint, or cost characteristics (labels) to scales (value). Labels are a set of descriptors within a given Criterion (Scale) that have corresponding (one-to-one) values. These are essentially utility maps or value curves for the Intra-Criteria. The scales are normalized by the maximum scale value within the Criterion value set.

The scale, s, for the *k*th alternative and the ith intra-criterion for each of the Level One groups are given below:

$$\bar{s}_{1ik} = \frac{s_{1ik}}{Max(s_{1i})} \qquad i = 1,2,\ldots 10 \qquad (8)$$

$$\bar{s}_{2ik} = \frac{s_{2ik}}{Max(s_{2i})} \qquad i = 1,2,\ldots 8 \qquad (9)$$

$$\bar{s}_{3ik} = \frac{s_{3ik}}{Max(s_{3i})} \qquad i = 1,2,\ldots 6 \qquad (10)$$

Calculation of the Final Value and Ranking of Alternatives will now be discussed. The dot product of the Inter-Criteria Weight vector times the scale utility curves is calculated for each of the three Level One Inter-Criteria groups and the kth alternative using:

$$v_k = \sum_{i=1}^{10} w_{1i} \bar{s}_{1ik} \qquad (11)$$

$$v_k = \sum_{i=1}^{8} w_{2i} \bar{s}_{2ik} \qquad (12)$$

$$v_k = \sum_{i=1}^{6} w_{3i} \bar{s}_{3ik} \qquad (13)$$

The structural hierarchy for the sensor manager is shown in outline form below. The first two levels contain the Inter-Criteria. Level One is the Mission Type and Level Two has three elements: illustrated by Air-to-Air, Air-to-Ground, and Surveillance mission. Each Inter-Criterion has its own set of internal scales called Intra-Criteria. The Intra-Criteria for one example is shown in Level Three of the outline below. The Scale is the lowest Level: Level Three in this example. In the example below, Level 1 is the "Air-to-Air Surveillance", Level 2 includes Target Classification, Target Size, Target ID, Target Range, Covariance Data, Range Rate, Named Area of Interest, Operator Priority, Time Since Last Update, and Engagement Status. Examples of Level 3, within Target Classification, are Red, Blue, Neutral, Unknown, and Search.

These scales provide a mapping to go from the Inter-Criteria Weights to the value of individual targets and searches. The specific categories and values will depend upon the overall application as well as lessons learned within this application.

I. Air-To-Air Surveillance

    1. Target Classification

        a. RED,
        b. BLUE,
        c. NEUTRAL,
        d. UNKNOWN,
        e. SEARCH.

    2. Target Size

        a. VERY LARGE,

b. LARGE, MEDIUM,
c. SMALL,
d. VERY SMALL,
e. UNKNOWN,
f. SEARCH.

3. Target ID

a. MISSILE,
b. WEAPON 1,
c. WEAPON 2,
d. WEAPON 3,
e. FIGHTER,
f. BOMBER,
g. TANKER,
h. RECON A/C,
i. SURVEILLANCE A/C,
j. HELICOPTER,
k. COMMERCIAL A/C,
1. UNKNOWN,
m. SEARCH.

4. Target Range

a. 75 km,
b. 100 km,
c. 125 km,
d. 150 km,
e. 175 km,
f. 200 km,
g. 225 km,
h. 250 km,
i. 300 km,
j. 400 km,
k. 500 km or larger,
l. SEARCH.

5. Covariance Data

a. >3 BEAM WIDTHS,
b. <3 BEAM WIDTHS,
c. <2 BEAM WIDTHS,
d. <1 BEAM WIDTHS,
e. <0.75 BEAM WIDTHS,
f. <0.50 BEAM WIDTHS,
g. <0.25 BEAM WIDTHS.

6. Range Rate

a. <MINUS 750 m/s,
b. <MINUS 500 m/s,
c. <MINUS 300 m/s,
d. <MINUS 200 m/s,
e. <MINUS 100 m/s,
f. <0,
g. >0,
h. >PLUS 100 m/s,
i. >PLUS 200 m/s,

> j. >PLUS 300 m/s,
> k. >PLUS 500 m/s,
> l. >PLUS 750 m/s,
> m. SEARCH.

7. Named Area Of Interest - 1, 2, 3, 4, 5, 6, 7, 8, 9, 10, Search.
8. Operator Priority - 1, 2, 3, 4, 5, 6, 7, 8, 9, 10
9. Time Since Last Update.

> a. <20 ms,
> b. <100 ms,
> c. <200 ms,
> d. <300 ms,
> e. <500 ms,
> f. <1 s,
> g. <2 s,
> h. <3 s,
> i. <5 s,
> j. >5 s.

10. Engagement Status

> a. NONE,
> b. PENDING,
> c. ACTIVE,
> d. TERMINAL,
> e. SEARCH.

II. Air-To-Ground Surveillance

1. Target Classification

> a. RED,
> b. BLUE,
> c. NEUTRAL,
> d. UNKNOWN,
> e. SEARCH.

2. Target Size

> a. VERY LARGE,
> b. LARGE,
> c. MEDIUM,
> d. SMALL,
> e. VERY SMALL,
> f. UNKNOWN,
> g. SEARCH.

3. Target ID

> a. TELS,
> b. TRUCK,
> c. TANK,
> d. CAR,
> e. COMMERCIAL,
> f. UNKNOWN,
> g. SEARCH.

4. Covariance Data

    a. >3 * DTNN (Distance To Nearest Neighbor),
    b. <2 * DTNN,
    c. <1 * DTNN,
    d. <0.5 * DTNN,
    e. <0.3 * DTNN,
    f. <0.1 * DTNN,
    g. SEARCH.

5. Named Area Of Interest - 1, 2, 3, 4, 5, 6, 7, 8, 9, 10 or Search.
6. Operator Priority - 1, 2, 3, 4, 5, 6, 7, 8, 9, 10.
7. Time Since Last Update

    a. <1 second,
    b. <3 seconds,
    c. <5 seconds,
    d. <10 seconds,
    e. <20 seconds,
    f. <30 seconds,
    g. <45 seconds,
    h. <1 minute,
    i. >1 minute.

8. Engagement Status

    a. NONE,
    b. PENDING,
    c. ACTIVE,
    d. TERMINAL,
    e. SEARCH.

III. Reconnaissance Evaluation Criteria

1. Optimized Angle

    a. <5°,
    b. <10°,
    c. <20°,
    d. <30°,
    e. <40°,
    f. <50°,
    g. <60°.

2. Visibility

    a. <100%,
    b. <75%,
    c. <50%,
    d. <25%,
    e. 10% visible.

3. Time Before Turn

    a. CAN COMPLETE,
    b. CAN NOT COMPLETE.

4. Named Area Of Interest - 1, 2, 3, 4, 5, 6, 7, 8, 9, 10 or Search.

5. Operator Priority - 1, 2, 3, 4, 5, 6, 7, 8, 9, 10
6. Allowable Latency

    a. <20 ms,
    b. <100 ms,
    c. <200 ms,
    d. <300 ms,
    e. <500 ms,
    f. <1 s,
    g. <2 s,
    h. <3 s,
    i. <5 s,
    j. >5 s.

Category number five in the Structural Hierarchy shown above is labeled "Covariance Data", and appears in both the air-to-air and air-to-ground missions. Here, it is assumed a Kalman filter is present in both the air-to-air and air-to-ground trackers. To keep the AHP "Covariance Data" category current, it may be necessary to perform the Kalman time update at a rate (every 0.1 seconds in our example) that is higher than the usual tracker rate.

$$\mathbf{P}_{k+1} = \mathbf{\Phi}_k \mathbf{P}_k \mathbf{\Phi}_k^T + \mathbf{Q}_k$$

where P is defined as the Covariance matrix, $\Phi$ is defined as the translation matrix, $\Phi^T$ is the transpose of the translation matrix, and Q is the process noise. Kalman Filtering is described in: Brown, Robert Grover, "Introduction to Random Signal Analysis and Kalman Filtering", John Wiley & Sons, 1983.
This will be significantly more expensive than the processing time required for the AHP processing. The size of the matrices in the above equation will be (9x9) assuming the Kalman state vector has nine states (three positions, three velocities, and three accelerations).

$$\mathbf{x} = \begin{pmatrix} x \\ y \\ z \\ \dot{x} \\ \dot{y} \\ \dot{z} \\ \ddot{x} \\ \ddot{y} \\ \ddot{z} \end{pmatrix}$$

Hence, the time update will involve two (9x9) matrix multiplies for each target every 0.1 seconds.

$$FLOPS = \frac{5,000(2)(9^3)}{0.1\text{sec}} = 7.29 x 10^7 \tag{14}$$

A SAR radar processor can have a computational throughput of 250 GFLOPS peak. Hence, the throughput computed with equation (14) is about 0.03 percent of the total system throughput capability.
From equation (14), the throughput is sensitive to the number of states in the Kalman filter. Hence, it may be preferable to only use a nine state filter for air targets and use a smaller filter for the targets constrained to the ground. In addition, the acceleration capability of ground targets is such that a four state filter may suffice.

$$\mathbf{x} = \begin{pmatrix} x \\ y \\ \dot{x} \\ \dot{y} \end{pmatrix}$$

For this filter the number of floating point operations would be:

$$FLOPS = \frac{5,000(2)(4^3)}{0.1\sec} = 6.4x10^6$$

Assuming there are only five hundred air targets, the load will be one-tenth of the previous number computed for a nine state filter: $7.29 \times 10^6$. Adding this number to the above result for the ground targets gives the following revised estimate of the total for both air and ground targets: $1.37 \times 10^7$. This number is almost an order of magnitude lower than the number computed with equation (14) and works out to about 0.005 percent of the total throughput capability of the system. Hence, the idea of using the AHP algorithm in a sensor manager appears feasible with today's processing capabilities.

A pair-wise voting method (as described by Saaty, Thomas L., Fundamentals of Decision Making and Priority Theory, Vol. 6, 2000, RWS Publications) can be used to create or recalibrate the sensor operation policy. Pair-Wise voting is the method of comparing the importance between each pair of Criteria on a 1 to 9 scale. Given n inter-criteria, the n by n square matrix A will consist of [$n$ ($n$-1) /2] pairs of evaluation criteria in the upper triangular portion.

The Principle Eigenvector of the Pair-Wise Comparison Matrix is calculated. The main diagonal will be all ones. The elements in the lower triangular portion of A will consist of the multiplicative inverse of the elements in the upper triangular portion. The solution for the inter-criteria weights w, given the matrix A is an eigenvalue problem:

$$\mathbf{A}\mathbf{w} = \lambda\mathbf{w}$$

Given A is a positive reciprocal matrix, a procedure for finding an approximate solution to the above equation is given in the Saaty reference. From the product matrix B:

$$\mathbf{B} = \mathbf{A}\mathbf{A} = \mathbf{A}^2$$

If the elements of **B** are denoted by $b_{ij}$, the eigenvector can be computed using the following formula.

$$w_i = \frac{\sum_{j=1}^{n} b_{ij}}{\sum_{i=1}^{n} \sum_{j=1}^{n} b_{ij}} \qquad (15)$$

Repeat the above calculation with successive powers of A until the solution for $w_i$ converges.
For example, recompute equation (15) with

$$\mathbf{B} = \mathbf{A}^4$$

$$\mathbf{B} = \mathbf{A}^8$$

$$\cdot$$
$$\cdot$$
$$\cdot$$

$$\mathbf{B} = \mathbf{A}^m$$

The Consistency of the Pair-Wise (Voting) Matrix can then be calculated. The consistency ratio provides feedback on whether the pair-wise voting of criteria is consistent. The presence of consistency is determined by calculating the Consistency Ratio ($C_r$).

$$C_r = \frac{1}{R_i} \frac{(\lambda_{max} - n)}{(n-1)}$$

where,

$$\lambda_{max} = \sum_{i=1}^{n} \sum_{j=1}^{n} a_{ij} w_j$$

$a_{ij}$ is the (latest) pair-wise voting positive reciprocal matrix A, $w_i$ is the vector of inter-criteria weights, and $R_i$ is defined by Foreman's table, where N is equal to the number of evaluation criteria.

| Random Index | $R_i$ value |
|---|---|
| N≤3 | 0.52 |
| N=4 | 0.89 |
| N=5 | 1.11 |
| N = 6 | 1.25 |
| N = 7 | 1.35 |
| N=8 | 1.40 |
| N=9 | 1.45 |
| N =10 | 1.49 |
| N >10 | 1.54 |

If the ratio $C_r$ is greater than 0.10, then the matrix $a_{ij}$ (original matrix of votes or the latest [iterated] matrix $a_{ij}$) is judged to be inconsistent.

Any inconsistent matrix can be made more consistent if the worst judgment $a_{ij}$ is changed to the ratio $w_i/w_j$. The most inconsistent judgment is the term in matrix $a_{ij}$ to be replaced. It may be in the upper or lower triangular matrix. If the matrix is still inconsistent, per the Inconsistency Ratio, the correction factor is applied as described below.

If the matrix is inconsistent, the Consistency of the Pair-Wise (Voting) Matrix can be improved. If the inconsistency of the pair-wise matrix is 10 percent or more, then the voting is judged to be inconsistent. If this is a second correction, then the first correction was not sufficient to produce a consistent estimate.

The first step is to identify which judgment is most inconsistent. An inconsistent matrix will become more consistent if the worst judgment $a_{ij}$ is changed to the ratio $w_i/w_j$, which is the ratio of inter-criteria weights for the ith and jth term. The worst judgment is found by forming the ratio

$$c_{ij} = \frac{a_{ij}}{w_i / w_j}$$

The (i,j) term to replace will be the maximum $c_{ij}$ element.

The second step is to correct this worst judgment. Replace the most inconsistent element in $a_{ij}$. For the given i,j indices identified in the first step, insert the new value $w_i./w_j.$ This yields a new $a_{ij}$ matrix with an improved consistency ratio.

It is expected this method of prioritization will provide an improved level of sensor performance. When applied to a radar, this invention promotes full utilization of the radar for performing the most valuable tasks, and allows for graceful degradation of performance in overload situations. The prioritized list is executed according to the resources available. The real-time re-ranking of target values provides the input data necessary to ensure processing of the higher valued targets even as processing resources degrade.

The disclosed example has two Levels and a third scale Level. However, these features are not fixed. The categories within Level One and Level Two illustrate the methodology and are not intended as rigid categories.

While the invention has been described in terms of several embodiments, it will be apparent to those skilled in the art that various changes can be made to the disclosed embodiments without departing from the scope of the invention as set forth in the following claims.

## Claims

1. A method of managing tasks to be performed by a sensor system, the method comprising the steps of:

   using an Analytic Hierarchy Process to determine priority values for a first set of tasks;
   performing the task having the highest priority value; and
   using the Analytic Hierarchy Process to determine priority values for a second set of tasks.

2. A method according to claim 1, wherein the steps of using an Analytic Hierarchy Process to determine priority values comprise the steps of:

   determining task evaluation criteria;
   calculating inter-criteria weights;
   getting intra-criteria categories;
   mapping scale values to the intra-criteria;
   ranking the tasks by value; and
   exporting data to a sensor manager.

3. A method according to claim 2, wherein the step of calculating inter-criteria weights comprises the step of assigning weights to the inter-criteria.

4. A method according to claim 2, wherein the step of calculating inter-criteria weights comprises the step of pair-wise voting between the inter-criteria.

5. A method according to claim 4, further comprising the step of determining a degree of consistency of the pair-wise voting.

6. A method according to claim 5, further comprising the step of reviewing and correcting inconsistencies in the pair-wise voting.

7. A method according to claim 2, wherein the step of calculating inter-criteria weights comprises the step of normalising the inter-criteria weights in each of a plurality of levels.

8. A method according to claim 7, further comprising the step of multiplying the normalised weight for each of the inter-criteria by a scaling factor.

9. A method according to any of claims 2 to 8, further comprising the step of scaling each of the intra-criteria.

**10.** A method according to any preceding claim, wherein the Analytic Hierarchy Process is used to determine priority values in real-time.

**11.** A method of prioritising sensor tasks using an Analytic Hierarchy Process, the method comprising the steps of:

defining a plurality of mission types;
establishing an inter-criteria weight for each of the mission types;
defining a plurality of evaluation criteria;
establishing an inter-criteria for each of the evaluation criteria;
using the inter-criteria weights for the mission types and the inter-criteria weights for the evaluation criteria to determine a relative value associated with each of the sensor tasks; and
selecting the sensor task having the highest value.

**12.** A method according to claim 11, wherein the step of using the inter-criteria weights for the mission types and the inter-criteria weights for the evaluation criteria to determine a relative value associated with each of the sensor tasks comprises the steps of:

assigning an initial value to each of the sensor tasks; and
normalising the initial value for each of the sensor tasks within each of the levels.

**13.** A method according to claim 11, wherein the step of using the inter-criteria weights for the mission types and the inter-criteria weights for the evaluation criteria to determine a relative value associated with each of the sensor tasks comprises the steps of:

using pair-wise voting between the inter-criteria to determine the relative value; and
normalising the relative value for each of the sensor tasks within each of the levels.

**14.** A method according to claim 13, further comprising the step of determining a degree of consistency of the pair-wise voting.

**15.** A method according to claim 14, further comprising the step of reviewing and correcting inconsistencies in the pair-wise voting.

**16.** A method according to any of claims 11 to 15, further comprising the step of scaling each of the intra-criteria.

**17.** A method according to any of claims 11 to 16, wherein the Analytic Hierarchy Process is used to prioritise sensor tasks in real-time.

USE ANALYTIC HIERARCHY PROCESS TO PRIORITIZE A PLURALITY OF TASKS

PERFORM THE TASK HAVING THE HIGHEST PRIORITY

*FIG. 1*

ESTABLISH A PROCESS HIERARCHY HAVING MULTIPLE LEVELS

DETERMINE TASK EVALUATION CRITERIA

CALCULATE INTER-CRITERIA WEIGHTS

GET INTER-CRITERIA CATEGORIES

MAP TO INTER-CRITERIA SCALE VALUES

RANK TASKS BY VALUE

EXPORT DATA TO THE SENSOR MANAGER

*FIG. 2*

EP 1 615 046 A1

<table>
<tr><td colspan="2" rowspan="2"><strong>European Patent Office</strong></td><td rowspan="2"><strong>EUROPEAN SEARCH REPORT</strong></td><td><strong>Application Number</strong></td></tr>
<tr><td>EP 05 07 6527</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 3 587 054 A (EDWARD R. BYRNE ET AL) 22 June 1971 (1971-06-22) * the whole document * | 1-17 | G01S7/295 G01S7/40 G01S13/88 |
| Y | EP 1 359 433 A (THALES) 5 November 2003 (2003-11-05) * the whole document * | 1-17 | |
| Y | SAATY T L: "How to make a decision: the analytic hierarchy process" EUROPEAN JOURNAL OF OPERATIONAL RESEARCH, vol. 48, 5 September 1990 (1990-09-05), pages 9-26, XP009056662 * the whole document * | 1-17 | |
| A | KOROUSIC-SELJAK B: "TASK SCHEDULING POLICIES FOR REAL-TIME SYSTEMS" MICROPROCESSORS AND MICROSYSTEMS, IPC BUSINESS PRESS LTD. LONDON, GB, vol. 18, no. 9, 1 November 1994 (1994-11-01), pages 501-511, XP000483414 ISSN: 0141-9331 * the whole document * | 1-17 | TECHNICAL FIELDS SEARCHED (Int.Cl.7) G01S |

The present search report has been drawn up for all claims

| Place of search | Date of completion of the search | Examiner |
|---|---|---|
| Munich | 9 November 2005 | Schmelz, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 05 07 6527

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2005

| Patent document cited in search report | | Publication date | Patent family member(s) | | Publication date |
|---|---|---|---|---|---|
| US 3587054 | A | 22-06-1971 | NONE | | |
| EP 1359433 | A | 05-11-2003 | FR | 2839371 A1 | 07-11-2003 |

For more details about this annex : see Official Journal of the European Patent Office, No. 12/82